Europäisches Patentamt

European Patent Office

Office européen des brevets

(11) Publication number: **0 145 248**
**B1**

## EUROPEAN PATENT SPECIFICATION

(45) Date of publication of patent specification: **13.07.88**

(21) Application number: **84307599.5**

(22) Date of filing: **02.11.84**

(51) Int. Cl.⁴: **B 23 K 3/02**

(54) Soldering tool.

(30) Priority: **03.11.83 US 549103**

(43) Date of publication of application:
**19.06.85 Bulletin 85/25**

(45) Publication of the grant of the patent:
**13.07.88 Bulletin 88/28**

(84) Designated Contracting States:
**CH DE FR GB LI**

(56) References cited:
**EP-A-0 021 046**
**DE-A-2 657 569**
**FR-A-2 505 225**
**GB-A-2 053 761**
**GB-A-2 096 933**

(73) Proprietor: **Fortune, William Samuel**
**29866 Cuthbert Road**
**Malibu California 90265 (US)**

(72) Inventor: **Fortune, William Samuel**
**29866 Cuthbert Road**
**Malibu California 90265 (US)**

(74) Representative: **Hughes, Brian Patrick et al**
**Graham Watt & Co. Riverhead**
**Sevenoaks, Kent TN13 2BN (GB)**

Courier Press, Leamington Spa, England.

## Description

### Background of the invention

This invention relates generally to soldering tools and particularly relates to such a temperature-controlled tool which is widely adaptable to different purposes.

One of the problems with prior art soldering tools featuring an electronic temperature control is that the heating element frequently generates heat which radiates or which is conducted back through the handle which must be held by the operator. This is particularly troublesome when the instrument is utilized for long product runs, so that it becomes hard for the operator to hold the hot handle.

Another problem with prior art temperature-controlled soldering instruments is that they usually require a copper soldering tip and shank. Copper has a great advantage in that it readily conducts heat and thus transfers heat from the heating element rapidly to the tip. The disadvantage of a copper tip is that it wears out fast and it may corrode due to the solder and the flux. Hence, it would be desirable to be able to utilize iron for the tip. Such a tip is long lasting. On the other hand, it produces little heat transfer between the heater and the iron tip. In order to be able to use an iron tip, the heater must be able to attain higher temperatures, so as to retain the tip at a desired temperature lower than that of the heater element. Hence, a combination of copper for good heat conductivity and an iron cladding or sleeve would be best to obtain a long-lasting tip which has excellent heat transfer between the heating element and the tip.

It is, accordingly, an object of the present invention to provide what may be called a general purpose soldering tool of simple construction and assembly.

Reference is made to DE—A1—2657569 which discloses a soldering iron having components functionally similar to the iron of the present invention, the components however being more difficult to assemble. EP—A1—21046 on the other hand discloses a relatively simple tool in which the soldering tip is merely located in the end of an exposed heating element.

### Summary of the invention

The present invention is a soldering tool comprising a generally cylindrical housing serving as a handle and having an electric cord receiving end of reduced diameter, a pair of internal opposite projections disposed inside said housing for guiding a circuit board bearing an electronic temperature control circuit, a heating element energised by said circuit, a soldering tip in heat transfer relationship with said heating element, and a retainer sleeve surrounding the heating element, characterised in that the soldering tip is trapped on the end of the heating element within a reduced diameter front portion of the retainer sleeve and in that a retainer bushing engages an external collar at the rear of the retainer sleeve and is itself secured in position by engagement with a threaded collar which screws onto the housing.

The connection between the housing forming the handle and the heater element which, in turn, heats the soldering tip, is preferably provided primarily by plastic materials which have a low heat transfer. This will maintain the handle at a temperature which feels cool to the hand of the operator.

There may also be provided a strain relief element through which the electric cord is threaded to substantially prevent pulling of the cord through the instrument. The strain relief element furthermore may have two flat sides so that the element bears against the walls of the handle, thereby to index the circuit board. In embodiments of the invention, the other end of the circuit board bears against the heating element assembly, which prevents longitudinal movement thereof.

The soldering tip and its shank may be secured in various ways. It may, for example, be held by a retainer sleeve which, in turn, is held in place by a threaded collar. Alternatively, the soldering tip and shank may be held in an adjustable position by a split collet. Various other ways are shown for holding or retaining the soldering tip and shank, such, for example, as a shoulder on the shank.

Furthermore, the soldering tip and shank may consist of a copper core having a rearwardly extending stainless steel sleeve and a cladding of the tip proper consisting of low carbon iron.

In case a collet is used for retaining the soldering tip and shank, it will permit adjustment of the distance between the heating element and the soldering tip, which, in turn, can be used to control the temperature. Additionally, it is feasible to redress the soldering tip, which may be of copper, by simply extending the shank further outwardly.

Finally, it is possible with such a construction to provide a soldering tip and shank which is provided with a tip on both ends, so that by simply reversing the soldering tip it can be used for different purposes.

### Brief description of the drawings

Embodiments of the present invention will now be described, by way of example, with reference to the accompanying drawings, in which:—

Fig. 1 is an elevational view of a general purpose soldering tool according to the invention;

Fig. 2, which is a partial elevational view, partly broken away, of the tool of Fig. 1, shows how the opening in the handle for adjusting the temperature of the soldering tip by an electronic control circuit can be uncovered for adjustment purposes;

Fig. 3 is an exploded view of the tool of Fig. 1, without, however, the soldering tip;

Figs. 4 and 5 are, respectively, a side elevational view and a front elevational view of a strain relief element for retaining the electric cord;

Fig. 6 is a side elevational view similar to that of Fig. 4 but illustrating a strain relief element and circuit board moulded in one piece;

Fig. 7 is a side elevational view of the rear end of the handle showing the strain relief element with the electric cord inserted therein;

Fig. 8 is an elevational view similar to that of Fig. 7 but rotated through 90° to show how the electric cord is threaded through the strain relief element;

Fig. 9 is a sectional view taken on lines 9—9 of Fig. 8 to illustrate how the strain relief element is maintained in a fixed position in the rear portion of the handle;

Fig. 10 is an exploded view of the construction of the soldering tip and its shank showing how the parts are retained;

Fig. 11 is a cross-sectional view, partly in elevation, of an alternative construction for retaining the soldering tip and its shank;

Fig. 12 is a cross-sectional view of another embodiment of the front end of the tool of the invention and illustrating the front end of a heat accumulator for better heat transfer to the tip;

Fig. 13 is an exploded view of a portion of the assembly of Fig. 12;

Fig. 14 is a cross-sectional view of the front end of the tool of the invention showing, as an alternative, an external heat accumulator for better heat transfer;

Fig. 15 is a partial exploded view of the assembly of Fig. 14;

Fig. 16 is a cross-sectional view of an alternative arrangement for securing the shank of the soldering tip in an adjustable position to its retainer sleeve by use of a collet;

Fig. 17 is a view similar to that of Fig. 16 but illustrating a shoulder on the shank of the soldering tip for retaining the tip;

Fig. 18 is a cross-sectional view of another alternative of the soldering tip and shank illustrating an iron tip with a copper core and a stainless steel cover to prevent flux from moving upwards of the soldering tip;

Fig. 19 is an exploded view illustrating a soldering tip and shank with a collet for fastening the shank in any desired position;

Fig. 20 illustrates a front elevational view of the collet to show that one wall of the collet is slit while the other wall has a partial indentation;

Fig. 21 is an exploded view showing a portion of the heating assembly, an internal heat accumulator which can be screwed into the interior of the shank of the soldering tip, as well as a threaded retainer bushing and retainer sleeve;

Fig. 22 is an exploded view illustrating an alternative construction where the shank of the soldering tip is retained by means of a shoulder which, in turn, permits plating of the tip and shoulder;

Fig. 23 is a cross-sectional view partly in elevation of a soldering shank having a different tip at both ends and retained by a collet;

Fig. 24 is a view similar to that of Fig. 23 but showing a low carbon, high iron alloy which has a press fit with a copper shank, while the other end of the shank is provided with still another soldering tip;

Fig. 25 is a cross-sectional view of the front end of the tool of the invention featuring a tube extending from the retainer sleeve and showing a filter and a vacuum or pressure pump for controlling access of fumes to the chamber;

Fig. 26 is a cross-sectional view of a portion of the handle and the front end of the tool to illustrate primarily how the fumes which are formed where the soldering takes place are removed;

Fig. 27 is a sectional view taken on lines 27—27 of Fig. 26 in order to illustrate a substantially square plate providing a space between the flat parts of the plate and the round sleeve for the fumes;

Fig. 28 is a section taken on lines 28—28 of Fig. 26 and showing a circuit board which is supported below the centre of the handle to provide sufficient space for a more sophisticated electronic control circuit;

Fig. 29 is a section taken on the same spot as Fig. 28 but illustrating two separate circuit boards disposed above and below an internal ridge within the housing, thereby to permit two separate electronic circuits;

Fig. 30 is a cross-sectional view similar to that of Figs. 28 and 29 and illustrating a similar circuit board occupying less than one-half the space of the housing, to permit space for an insulated tube for a hose connection, as shown in Fig. 26, to remove the fumes; and

Fig. 31 illustrates another application of the tool of the invention with a tube extending from the sleeve housing the heater and a special desoldering tip.

Description of the preferred embodiments

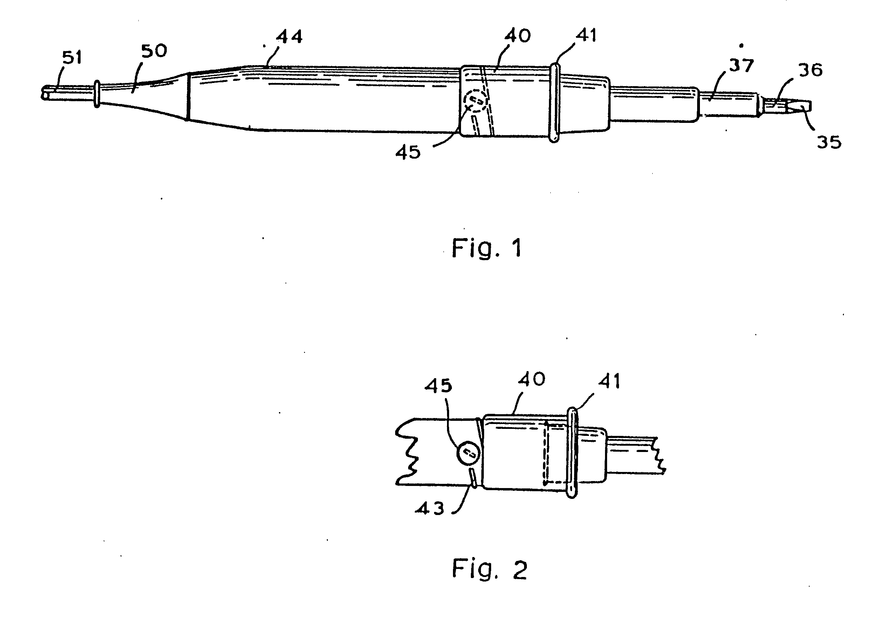

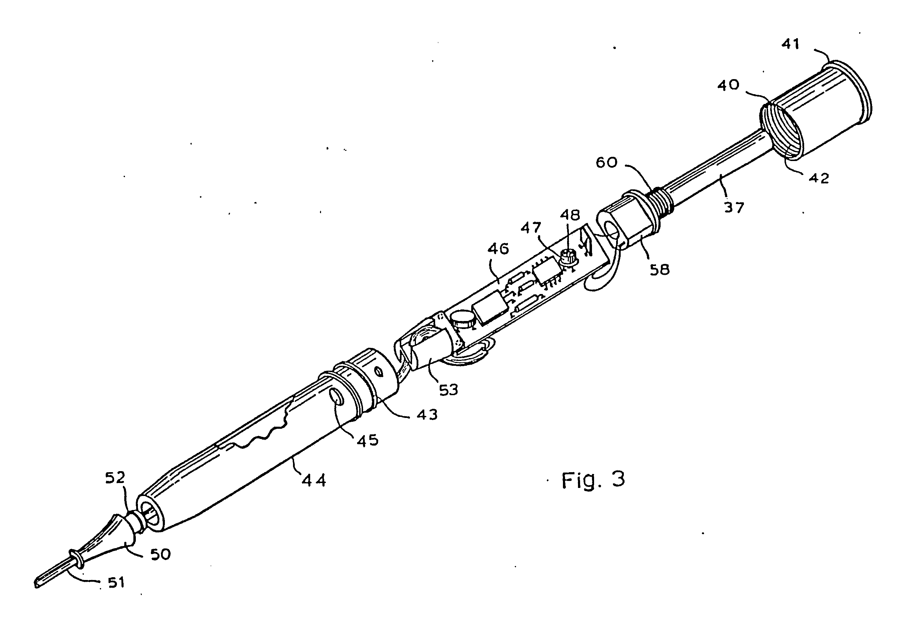

Referring now to the drawings and particularly to Figs. 1 to 9, there is illustrated a preferred embodiment of the general purpose soldering tool of the present invention. As shown particularly in Fig. 1, the tool includes a soldering tip 35 followed by a shank 36 which is preferably made integral to the tip 35. The soldering tip 35 is followed by a heating element assembly 37 which, in turn, is followed by a threaded collar 40 which has a circular rim 41 facing the tip 35. The threaded collar 40 has internal threads 42, as clearly shown in Fig. 3, which mesh with the external threads 43 of the handle or housing 44.

The housing 44 is provided with a circular opening 45 which is normally covered by the threaded collar 40. However, as clearly shown in Fig. 2, the collar 40 with its outer rim 41 may be screwed toward the soldering tip 35, thereby to uncover the opening 45. Disposed within the opening 45 and on the circuit board 46 is a potentiometer 47 with a cross-shaped depression 48 so that a screwdriver may be inserted into the depression 48 to adjust the temperature of the heating element forming part of the heating assembly. The housing or handle 44 extends rearwardly and forms a cord bushing 50 of reduced diameter. The electric cord 51 extends rearwardly of the bushing 50.

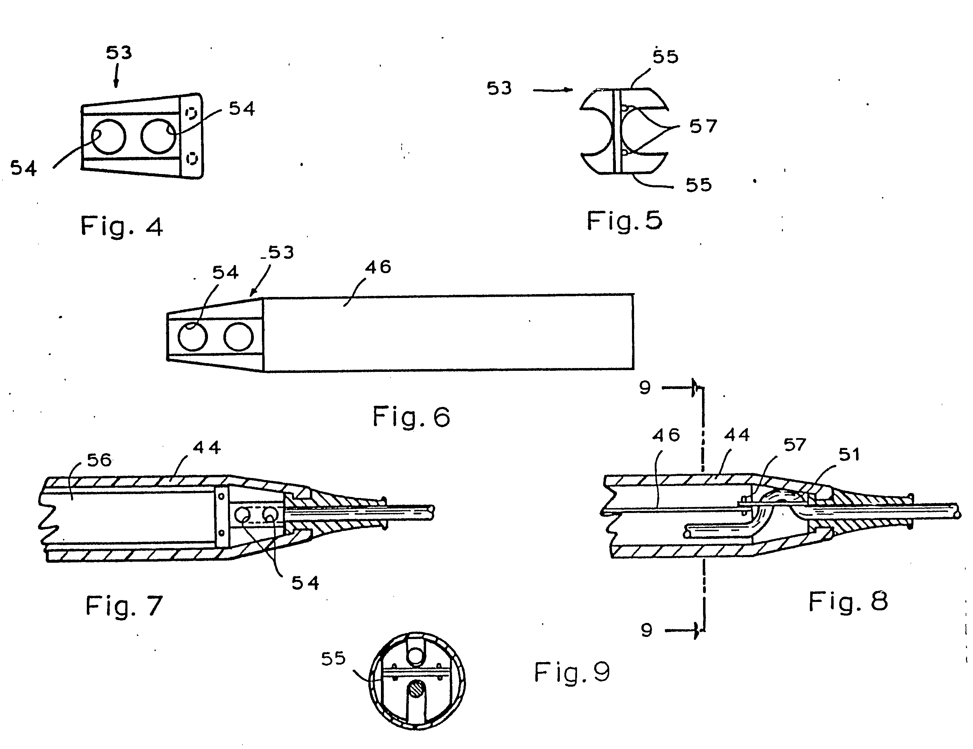

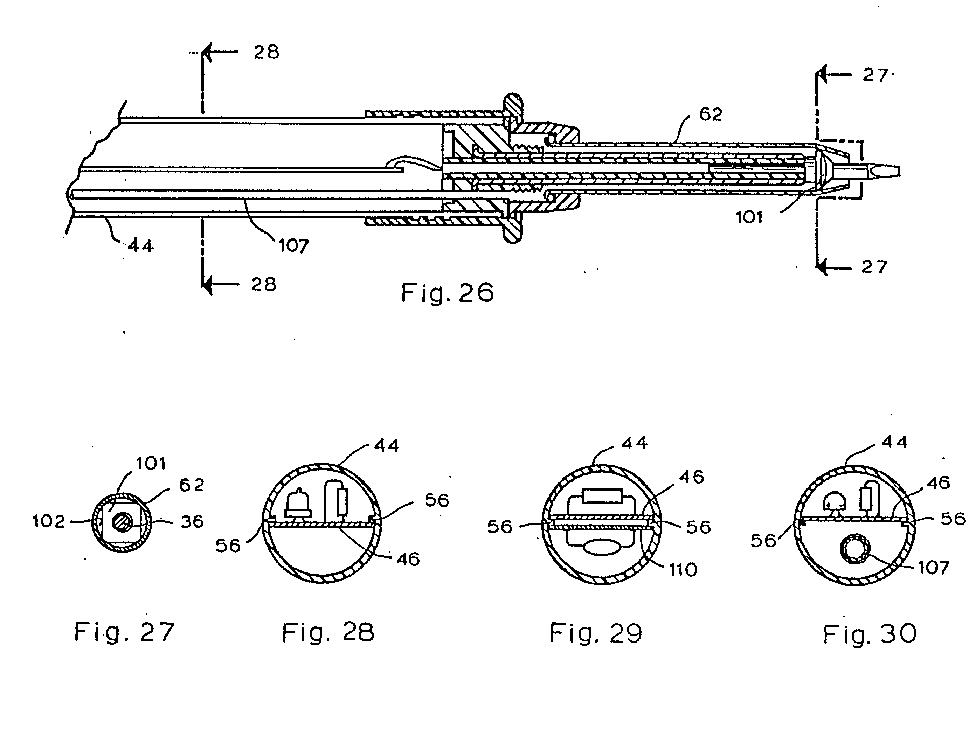

It should be noted, for example from Fig. 3, that the circuit board is provided with various circuit components including amplifiers, etc. The rear portion of the circuit board 46 bears an anti-twist pull cord bushing 53, the purpose of which is to prevent the cord being pulled out of the handle 44. As clearly shown in Figs. 4 and 5, the bushing is provided with two large circular openings 54 through which the cord 51 is threaded, as shown in Figs. 7 and 8. The cord bushing 53 is provided with opposite straight edges 55 which bear against the inner wall of the housing 44. This is particularly shown in Fig. 9. This, in turn, will prevent the cord bushing from rotating, and hence serves to index the circuit board 46. The circuit board, in turn, rests on two opposite projections or ledges 56. These two opposite projections 56 are clearly shown in Figs. 28 to 30.

The anti-twist pull cord bushing 53 may be provided with pegs 57, as clearly shown in Fig. 5, for securing it to appropriate apertures in the circuit board. Alternatively, it is feasible to mould the cord bushing 53 integral with the circuit board 46, as shown in Fig. 6.

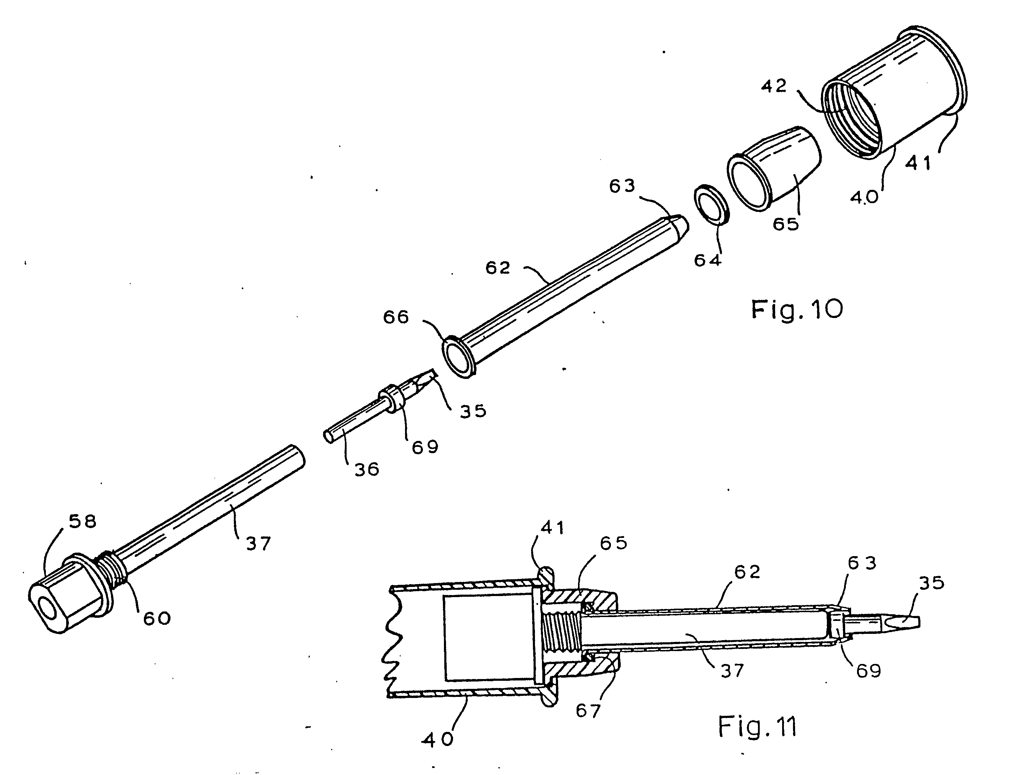

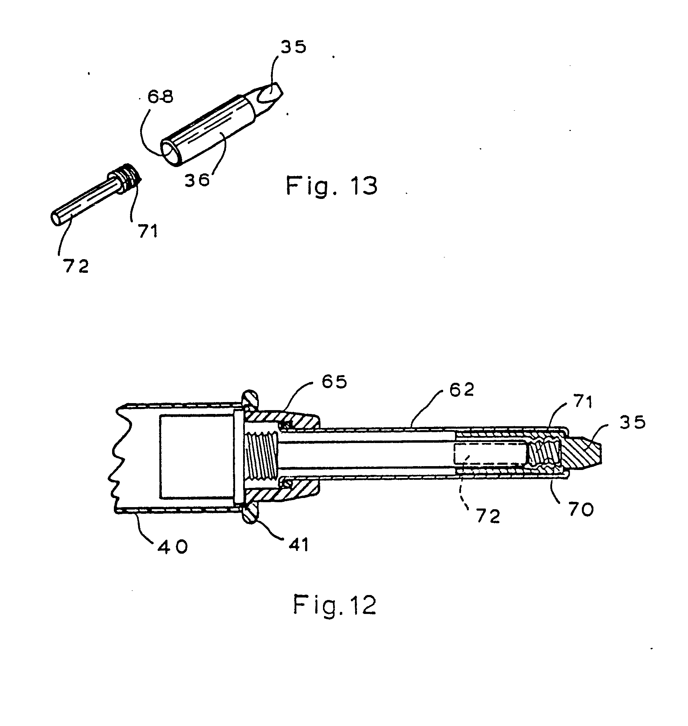

It should be noted that the heater assembly 37 may be provided with a heater bushing 58 provided with external threads 60 which may mesh, for example, with a retainer sleeve, to be discussed in connection with Figs. 10 and 11.

An alternate construction of the soldering tool of the present invention is illustrated in Figs. 10 and 11, to which reference is now made. The tool of Fig. 10 additionally features a retainer sleeve 62 having a reduced front portion 63, a ring 64, such as an O-ring, a retainer bushing 65, the remaining parts being the same as described before. The assembled instrument is shown in Fig. 11. It will be noted that the soldering tip is provided with an enlarged external collar 69 which, in turn, is retained by the reduced front portion 63 of the retainer sleeve 62. The heating element assembly 37 is enclosed by the retainer sleeve 62. The retainer bushing 65, in turn, holds the external rearward collar 66 of the retainer sleeve 62, while the ring 64 bears against the internal shoulder 67 of the retainer bushing 65. Finally, the threaded collar 40 fits over the retainer bushing 65 and, again, has an external outwardly extending projection or rim 41.

It will be noted that in the embodiment of Figs. 10 and 11 there is no need for any threaded connections between the retainer sleeve 62 and the retainer bushing 65, but only for the threaded collar 40 which screws on to the threads 43 of the housing 44 (Fig. 3).

In some cases it may be desirable to increase the heat conduction between the heating assembly and the soldering tip. This may be accomplished, for example, by a heat accumulator disposed between the heating element and the shank of the soldering tip. Such an inner heat accumulator is shown in Figs. 12 and 13, which will now be discussed. As clearly shown in Figs. 12 and 13, the shank 36 of the heavy duty soldering tip 35 is hollow, as shown at 68. The front portion of the shank 36 is provided with an internal thread 70. This thread meshes with the external thread 71 of the inner heat accumulator 72. Otherwise, the construction is the same as that shown in Figs. 10 and 11. It will be evident that the inner heat accumulator 72 provides an additional path for the heat, and hence there is a better heat conduction between the heater and the soldering tip.

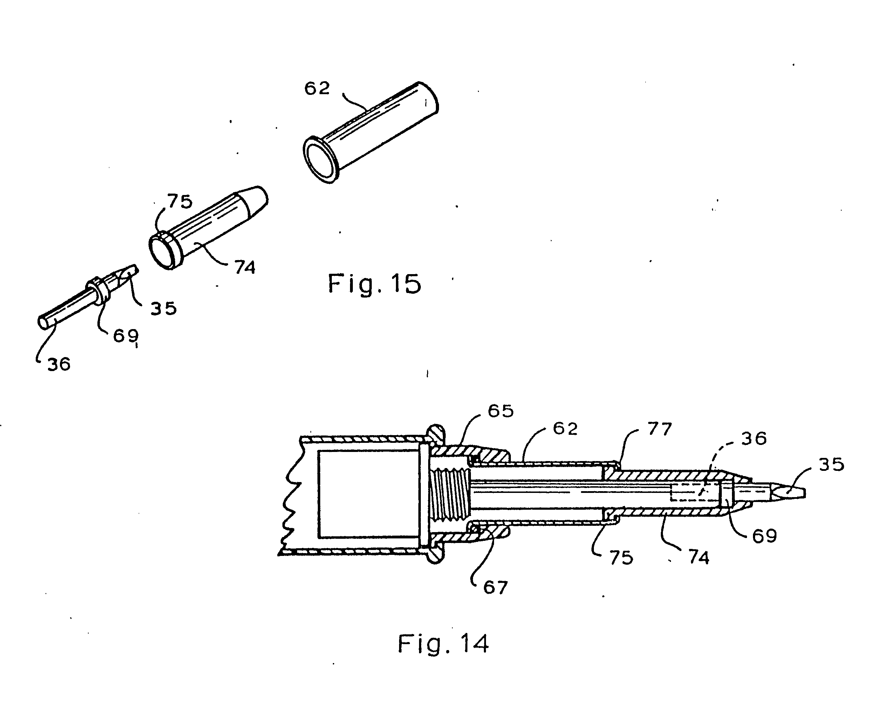

Instead of utilizing an inner heat accumulator, it is also feasible to provide what may be called an outer heat accumulator which simultaneously serves as a tip retainer. Such a tip retainer is shown at 74, in Figs. 14 and 15. The accumulator tip retainer 74 is provided at its rearward end with an external collar 75 which, in turn, is held by a somewhat shorter retainer sleeve 62. The retainer sleeve 62 has an inwardly reduced portion 77 which engages the collar 75 and retains it. The remainder of the construction is the same as that previously described.

In accordance with the present invention, it is feasible to utilize soldering tips and shanks consisting either of copper or of iron, or of a combination of the two. The advantages and disadvantages of copper and iron have already been pointed out. Basically, however, copper is a far better heat conductor but is subject to corrosion by the soldering flux and the heat. On the other hand, iron will withstand flux and other corrosive materials, as well as the high temperatures of the soldering process. However, the heat conduction of iron is very poor compared to that of copper.

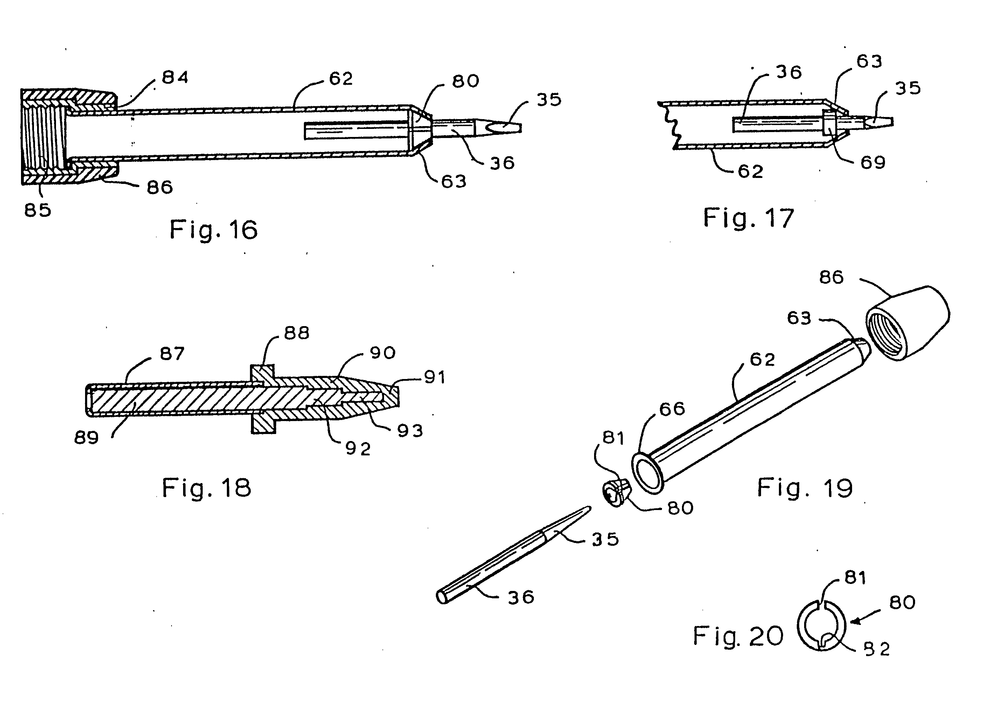

Referring now to Fig. 16, there is illustrated a soldering tip 35 and shank 36 of constant diameter. However, the shank 36 can be fixed in any desirable position by a slotted collet 80. Such a collet 80 is shown most clearly in Fig. 19 and Fig. 20, which is a front elevational view. This clearly shows that one side of the collet is cut through, as at 81, while the opposite side is partially cut, as shown at 82. The collet is retained by a retainer sleeve 62 which has a conical front end 83 making a tight fit with the collet 80. The retainer sleeve 62 may also be provided with an insert 84 having internal threads 85 and a retainer bushing 86. Therefore, by pulling the assembly rearwardly, the soldering tip 35 and shank 36 may be retained in any desired position.

The length of the soldering tip and shank 36 and its distance from the heating element assembly determine the temperature that the soldering tip 35 attains. Also, if the soldering tip and shank are made of copper, they could be reworked if the tip is worn out, and the entire tip may be pushed forward and retained in its new position by the collet 80.

Fig. 17 shows a different construction where the soldering tip 35 and shank 36 are fixed by a collar 69 which, in turn, is retained by the forward conical end 83 of the retainer sleeve 62.

Another construction of the soldering tip is shown in Fig. 18. Here the tip consists of a copper core 89 which is surrounded by a stainless steel sleeve 87 which extends under the outer collar 88 of an iron shank 90 with a soldering tip 91. It will be noted that the inner core 89 is step-wise reduced in diameter, as shown at 92 and 93, to correspond to the tapered outer end of the tip 91.

It will be noted that the stainless steel sleeve 87 has a purpose to prevent corrosion of the copper core 89 and the solder or flux from running or wetting upwardly on the soldering shank. The construction of Fig. 18 has the advantage that it combines the high conductivity of copper with the high resistivity of iron to corrosion by flux and the like. On the other hand, this construction does not allow the possibility of reworking the tip. Hence, when the tip is worn out, the entire tip assembly must be discarded.

Fig. 19 illustrates an exploded view of the construction of Fig. 16. It will be noted that the collet 80 is retained by the conical end 83 of the retainer sleeve 62, while its rearward shoulder 66 is held by the retainer bushing 86 which is capable of withstanding high temperatures.

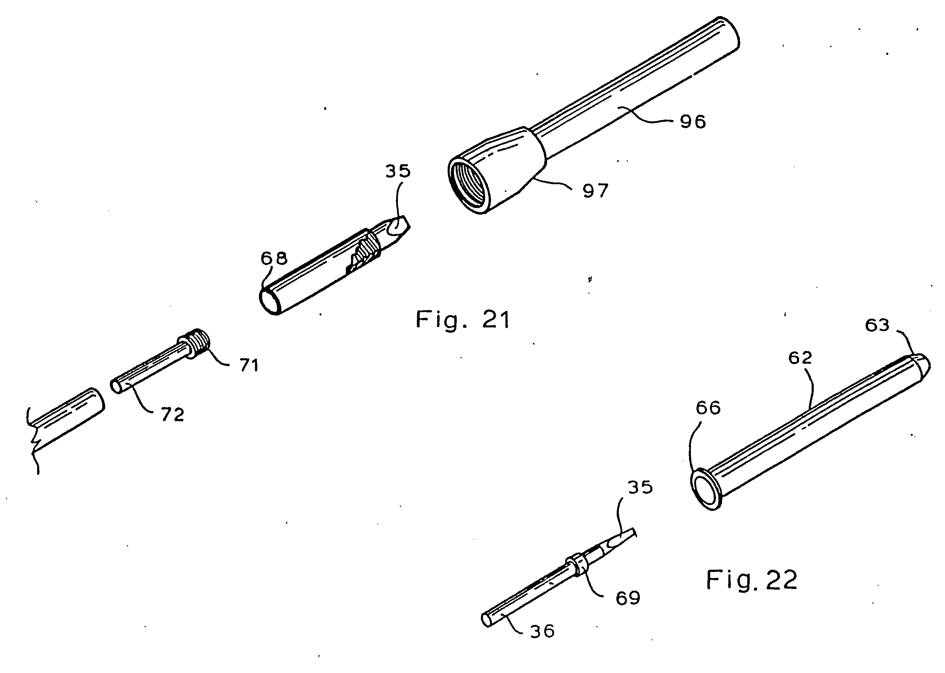

Fig. 21 agains shows an inner heat accumulator like that of Fig. 12, but with a slightly modified construction. The inner heat accumulator 72 is again provided with external threads 71 to fit interior threads of the soldering tip 35 and its shank 68. This assembly is retained by the retainer sleeve 96 having a retainer bushing 97 internally threaded to fit on exterior threads 60 (see Fig. 3) of the heater bushing 58.

Fig. 22 shows a construction of soldering tip 35 and shank 36 and provided with a collar 69 so that it is not necessary to provide a collet. The assembly is again retained by the retainer sleeve 62 and the retainer bushing 65.

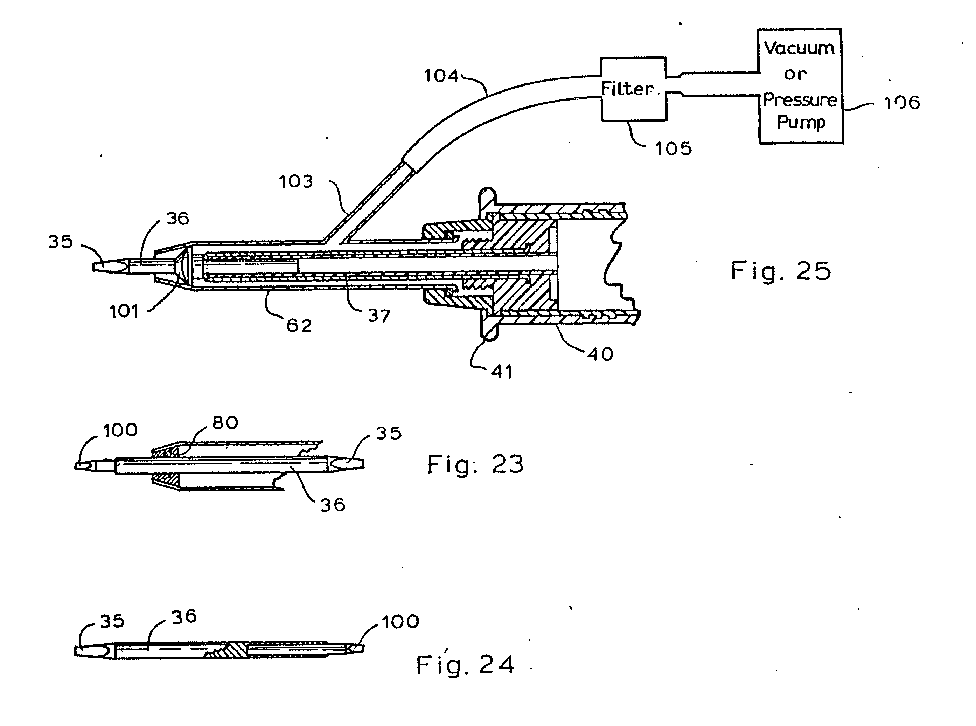

It is also feasible to provide a soldering tip which can be reversed and hence has two working tips such as 35 and 100, as shown in Fig. 24. The shank 36 and tip 35 may be made of copper, while the tip 100 may consist of a high iron alloy having a press fit with the copper shank. Such a low carbon steel is called ingot iron and typically has the following analysis: carbon .04%, manganese .05%, phosphorus .007%, sulplur .020%, and a trace of silicon, the remainder being iron.

Fig. 23 illustrates the tip of Fig. 24 in reverse position. In this case a collet 80 may be utilized to retain the two tips 35 and 100 in their proper positions.

Referring now to Figs. 25 to 30, there are illustrated two different ways for removing fumes which are created during the soldering process and to exhaust them away from the operator.

Fig. 25 illustrates an air deflector baffle 101, shown more clearly in Fig. 27, which is substantially rectangular with a circular opening for the shank 36 and the soldering tip and which fits the retainer sleeve 62 in such a manner that openings such as 102 are left free. The fumes are then conducted through the interior of the retainer sleeve 62 and a tube 103 extending from the sleeve 62 and a flexible tube 104 through a filter 105 and a vacuum or pressure pump 106. When the pump 106 is operated as a vacuum pump, it will suck out the fumes adjacent to their point of origin; that is, adjacent to the point where the flux and solder are heated, and they may be exhausted from the vacuum pump some distance away from the operator.

In some cases it may be desirable to conduct the fumes through a special tube or hose which extends through the housing toward the rear of the instrument. Such a construction is shown in Fig. 26. Here again there is a baffle 101. From there the fumes are again guided through the inner surface of the retainer sleeve 62 and thence through a hose connection 107 which passes through housing 44 and out toward the rear of the housing. Again, the hose 107 may be suitably connected with a filter 105 and a pump 106.

It should be noted that in the embodiment of Fig. 25 the pump 106 may also create an air pressure which forces the air through the retainer sleeve 62 and along the heating assembly 37 and past the baffle 101 toward the point where the soldering operation normally takes place. This hot air stream may be utilized for preheating circuit boards, drying and trouble-shooting of live electronic circuit boards.

Figs. 28 to 30 illustrate how the projections 56 on the inner surface of the housing 44 may be utilized to suspend one or two circuit boards or to create extra space for the hose 107, for example. Thus, in Fig. 28 there is a single circuit board 46 below projection 56 upon which various components may be maintained, as shown.

Fig. 29 illustrates that it is also feasible to maintain two circuit boards 46 and 110 above and below projections 56, each of which may be provided with electronic components. This makes it possible to utilize a more sophisticated temperature control circuit, which usually requires more components. Alternatively, it is possible to maintain two separate circuits, each on one of the circuit boards 46, 110.

Further, Fig. 30 illustrates a circuit board 46 maintained above the projections 56 to provide extra space for the hose 107 which is used in Fig. 26 to evacuate fumes.

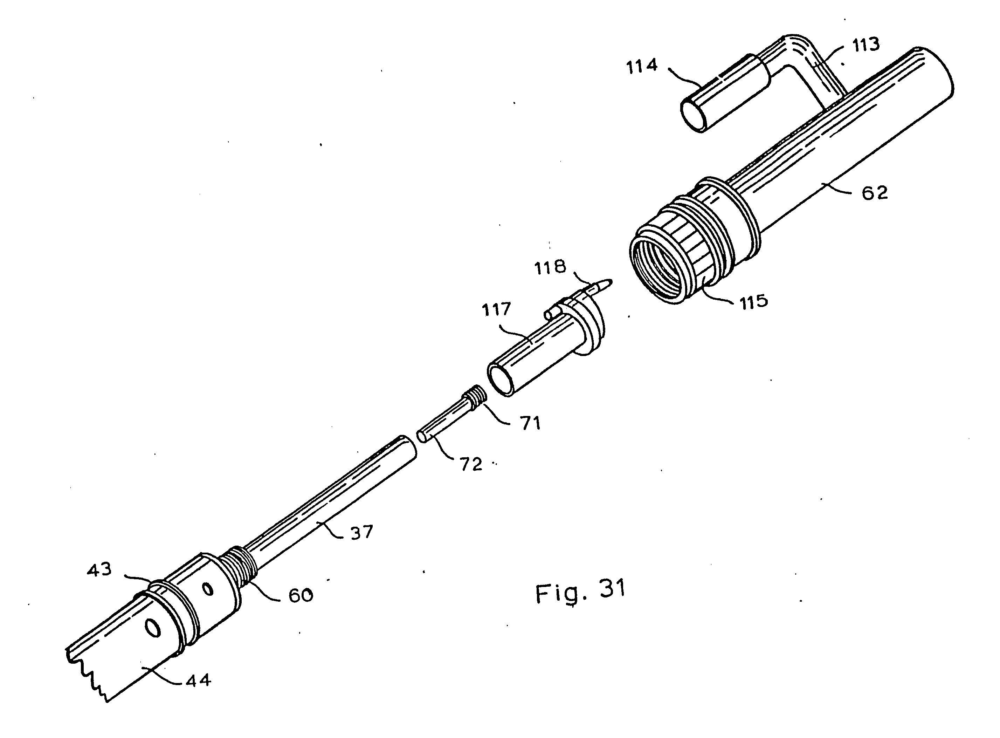

Finally, Fig. 31 shows how the soldering tool of the invention can readily be changed into a desoldering instrument. To this end, a special attachment may be used, such as a tube 113 and a hose 114 extending therefrom. These extend from the retainer sleeve 62, which at its rearward end has an internally threaded collar 115 which meshes with the exterior thread 43 forming part of the heating element assembly 37.

The instrument is also provided with an internal heat accumulator 72 which extends through a hollow desoldering shank 117, and the exterior thread 71 of the accumulator 72 meshes with the corresponding interior thread of the desoldering shank 117 which is provided with a desoldering tip 118. Thus, the soldering tool of the invention may readily be converted into a desoldering tool, as shown in Fig. 31.

It should be noted that an iron tip may be used with the soldering tool of the present invention, because it is feasible to utilize a heater element which can be used for extended periods of time at a much higher temperature than was hitherto possible. The instrument features a ceramic heater which is available as type FM-95 from Kyocera Corporation, a company of Kyoto, Japan. The heater may be utilized with 24v AC, 120v AC or 220v AC. Basically, the resitance material is applied to the ceramic and is subsequently heated and covered with a ceramic insulating material. The heater is of the PTC type; that is, of the positive temperature coefficient type.

The plastic materials which connect the soldering tip to the handle, such as the threaded collar 40, the retainer sleeve 62, the retainer bushing 65, etc., are preferably made of a plastic material, or of a metal, which has very poor heat conduction. Among these materials are polyphenylene sulfide (PPS), acetal, and stainless steel. this construction, in turn, makes it possible to run the heater at a higher temperature than that of the soldering tip; that is, at a temperature in excess of that required for soldering.

It may also be noted that normally the threaded collar 40 may be sealed to cover the opening 45 so that the buyer or customer cannot change the set temperature of the heater. In other words, this adjustment is done at the factory and should usually not be changed by the customer.

There has thus been disclosed a general purpose soldering tool adaptable for many purposes and capable of being used all day without damage. The heat transfer between the heating element assembly and the tip may be increased by a heat accumulator disposed either within or without the tip assembly. The fumes which usually are generated during soldering, particularly by the flux, may be removed either outside the retainer sleeve or directly from the handle by a pump. The instrument may be used either with copper or iron tips, either of which has special advantages and disadvantages. This is made possible by a heater capable of attaining higher temperatures and better heat insulation between the heating assembly and the handle. A special strain relief element has been shown which prevents the electric cord from being pulled out of the tool and at the same time indexes the circuit board. The circuit board, in turn, can assume several positions, and it is even feasible to provide two circuit boards, each with its own electronic components. By the provision of a collet it is feasible to adjust the position of the soldering tip, which in turn controls the temperature of the tip. Also, a longer tip permits to work between closely adjacent electronic components. If the tip consists of copper, it can be reworked and its distance from the retainer sleeve can be readjusted by the collet.

**Claims**

1. A soldering tool comprising a generally cylindrical housing (44) serving as a handle and having an electric cord receiving end (80) of reduced diameter, a pair of internal opposite projections (56) disposed inside said housing for guiding a circuit board (46) bearing an electronic temperature control circuit, a heating element (37) energised by said circuit, a soldering tip (35) in heat transfer relationship with said heating element, and a retainer sleeve (62) surrounding the heating element, characterised in that the soldering tip (35) is trapped on the end of the heating element (37) within a reduced diameter front portion (63) of the retainer sleeve (62) and in that a retainer bushing (65) engages an external collar (66) at the rear of the retainer sleeve and is itself secured in position by engagement with a threaded colloar (40) which screws onto the housing.

2. A soldering tool as claimed in claim 1, characterised in that a heat accumulator (72, 74) is provided between said heating element (37) and said soldering tip (35) for enhancing the heat transfer to said soldering tip.

3. A soldering tool as claimed in claim 2, characterised in that said heat accumulator (74) is disposed outside said heating element (37) and within said retainer sleeve.

4. A soldering tool as claimed in claim 2, in which a hollow shank is associated with the soldering tip, and characterised in that said heat accumulator is disposed within the hollow shank.

5. A soldering tool as claimed in claim 4, characterised in that said inner heat accumulator (72) has an outer thread meshing (71) with an inner thread (70) in the interior of said soldering shank.

6. A soldering tool as claimed in any preceding claim, characterised in that a strain relief element (53) is provided for securely holding an electric cord, said strain relief element having two openings (54) for looping said electric cord therethrough and also having two flat sides for preventing rotation of said element within said cord-receiving end of said housing, said strain relief element being provided with a pair of pins (57) engageable with corresponding small apertures in one end of said circuit board.

7. A soldering tool as claimed in any preceding claim, characterised in that two circuit boards (46, 110) are disposed, one above and one below said opposite projections.

8. A soldering tool as claimed in any preceding claim, characterised by an annular space between the free end of said retainer sleeve and the soldering tip for removing fumes, under the influence of a vacuum applied thereto, created by the soldering operation.

9. A soldering tool as claimed in claim 8, characterised by a tube (10) communicating with said annular space, and extending outwardly from the retainer sleeve for connection to a vacuum source.

10. A soldering tool as claimed in claim 9, characterised in that a baffle (101) is provided within said retainer sleeve and at the front thereof, said baffle being of substantially square shape to leave openings between said baffle and the circular interior of said retainer sleeve to permit fumes to pass.

11. A soldering tool as claimed in any preceding claim, in which said soldering tip has a shank (36) and characterised in that said shank is provided with a collet (80) for adjustably retaining said shank and means on said retainer sleeve for locking said collet to retain said shank in a desired position.

12. A soldering tool as claimed in claim 11, characterised in that said soldering shank (36) is provided at both ends with a soldering tip (35, 100) each of which is usable by reversing the soldering tip and retaining it by said collet (80).

13. A soldering tool as claimed in any preceding claim, characterised in that said soldering tip consists of iron with a copper core.

14. A soldering tool as claimed in claim 13, characterised in that said copper core has a step-wise reduction in diameter throughout said shank and toward said tip.

15. A soldering tool as claimed in claim 14, characterised in that a stainless steel sleeve is disposed about said soldering shank to prevent solder and flux from creeping up on said shank, and to minimize corrosion of said copper core.

**Patentansprüche**

1. Lötwerkzeug, bestehend aus einem Gehäuse (44) von zylindrischer Grundform, das als Handgriff dient und ein Aufnahmeende (80) verkleinerten Durchmessers für eine elektrische Schnur aufweist, einem Paar innerer, einander gegenüberliegender Vorsprünge (56), die im Inneren des Gehäuses zur Führung einer Leiterplatte (46) mit einer elektronischen Temperaturregelschaltung angeordnet sind, einem von dieser Schaltung gespeisten Heizelement (37), einer mit dem Heizelement wärmeübertragend in Verbindung stehenden Lötspitze (35) und einer das Heizelement umgebenden Haltehülse (62), dadurch gekennzeichnet, daß die Lötspitze (35) am Ende des Heizelements (37) innerhalb eines vorderen Bereichs (63) verkleinerten Durchmessers der Haltehülse (62) eingefaßt und eine Haltebuchse (65) mit einem Außenbund (66) am hinteren Bereich der Haltehülse in Eingriff steht und selbst durch Eingriff mit einer auf das Gehäuse aufgeschraubten Gewindebuchse (40) in ihrer Position festgelegt ist.

2. Lötwerkzeug nach Anspruch 1, dadurch gekennzeichnet, daß ein Wärmespeicher (72, 74) zwischen dem Heizelement (37) und der Lötspitze (35) zur Verstärkung der Wärmeübertragung an die Lötspitze vorgesehen ist.

3. Lötwerkzeug nach Anspruch 2, dadurch gekennzeichnet, daß der Wärmespeicher (74) außerhalb des Heizelements (37) und innerhalb der Haltehülse angeordnet ist.

4. Lötwerkzeug nach Anspruch 2, bei dem der Lötspitze ein Hohlschaft zugeordnet ist, dadurch gekennzeichnet, daß der Wärmespeicher innerhalb des Hohlschaftes angeordnet ist.

5. Lötwerkzeug nach Anspruch 4, dadurch gekennzeichnet, daß der innere Wärmespeicher (72) ein Außengewinde (71) aufweist, das mit einem Innengewinde (79) im Inneren des Lötspitzenschaftes in Eingriff steht.

6. Lötwerkzeug nach einem der vorhergehenden Ansprüche, dadurch gekennzeichnet, daß ein Zugentlastungselement (53) zur Festlegung einer elektrischen Schnur vorgesehen ist, das Zugentlastungselement zwei Öffnungen (54) zum Durchschlingen der elektrischen Leitung und ferner zwei Flachseiten zur Verhinderung einer Drehung des Elements im Schnuraufnahmeende des Gehäuses aufweist und daß das Zugentlastungselement mit einem Paar von Stiften (57) versehen ist, die mit entsprechenden kleinen Öffnungen in einem Ende der Leiterplatte in Eingriff bringbar sind.

7. Lötwerkzeug nach einem der vorhergehenden Ansprüche, dadurch gekennzeichnet, daß zwei Leiterplatten (46, 110), die eine über und die andere unter den einander gegenüberliegenden Vorsprüngen, vorgesehen sind.

8. Lötwerkzeug nach einem der vorhergehenden Ansprüche, gekennzeichnet durch einen Ringraum zwischen dem freien Ende der Halthülse und der Lötspitze zur Abführung von durch den Lötvorgang hervorgerufenem Rauch unter dem Einfluß eines angelegten Unterdrucks.

9. Lötwerkzeug nach Anspruch 8, gekennzeichnet durch eine Leitung (103), die mit dem Ringraum in Verbindung steht und sich von der Halthülse für eine Verbindung mit einer Unterdruckquelle nach außen erstreckt.

10. Lötwerkzeug nach Anspruch 9, dadurch gekennzeichnet, daß eine Leitplatte (101) innerhalb der Haltehülse an deren vorderem Ende vorgesehen ist und die Leitplatte eine im wesentlichen quadratische Form zum Belassen von Öffnungen zwischen der Platte und dem kreisförmigen Inneren der Haltehülse für einen Rauchdurchgang aufweist.

11. Lötwerkzeug nach einem der vorhergehenden Ansprüche, bei dem die Lötspitze einen Schaft (36) besitzt, dadurch gekennzeichnet, daß der Schaft mit einem Klemmring (80) zum einstellbaren Halten des Schaftes versehen ist und Mittel an der Haltehülse zum Festlegen des Klemmrings zum Halten des Schaftes in einer Sollposition vorgesehen sind.

12. Lötwerkzeug nach Anspruch 11, dadurch gekennzeichnet, daß der Lötspitzenschaft (36) an beiden Enden mit einer Lötspitze (35, 100) versehen ist, von denen jede durch Umkehrung der Lötspitze und deren Festlegung durch den Klemmring (80) verwendbar ist.

13. Lötwerkzeug nach einem der vorhergehenden Ansprüche, dadurch gekennzeichnet, daß die Lötspitze aus Eisen mit einem Kupferkern besteht.

14. Lötwerkzeug nach Anspruch 13, dadurch gekennzeichnet, daß der Kupferkern eine stufenweise Durchmesserverkleinerung im Schaft zur Spitze hin aufweist.

15. Lötwerkzeug nach Anspruch 14, dadurch gekennzeichnet, daß eine Hülse aus nichtrostendem Stahl zur Verhinderung eines Aufkriechens von Löt- und Flußmittel auf den Schaft und zur Minimierung einer Korrosion des Kupferkerns um den Lötspitzenschaft angeordnet ist.

## Revendications

1. Outil de soudage comprenant un boitier (44) de forme générale cylindrique servant de manche et ayant une extrémité (80) de réception d'un cordon électrique de diamètre réduit une paire de saillies internes opposées (56) disposées à l intérieur du boîtier pour le guidage d'une plaque de circuit (46) portant un circuit électronique de commande de température un élément chauffant (37) excité par ce circuit une pointe de soudage (35) en relation de transfert thermique avec l'élément chauffant, et une douille de retenue (62) entourant l'élément chauffant caractérisé en ce que la pointe de soudage (35) est maintenue contre l'extrémité de l'élément chauffant (37) à l'intérieur d'une partie frontale de diamètre réduit (63) de la douille de retenue (62) et en ce qu'un raccord de retenue (65) est en contact avec une collerette externe (66) prévue à l'arrière de la douille de retenue et il est lui-meme fixé en position par contact avec une bague taraudé (40) qui est vissée ne douille taraudée (40) qui est vissée sur le boîtier.

2. Outil de soudage suivant la revendication 1 caractérisé en ce qu'un accumulateur de chaleur (72, 74) est prévu entre l'élément chauffant (37) et la pointe de soudage (35) pour accroître le transfert de chaleur en direction de la pointe de soudage.

3. Outil de soudage suivant la revendication 2 caractérisé en ce que l'accumulateur de chaleur (74) est disposé à l'extérieur de l'élémenent chauffant (37) et à l'intérieur de la douille de retenue.

4. Outil de soudage suivant la revendication 2 dans lequel un fût creux est associé à la pointe de soudage, caractérisé en ce que l'accumulateur de chaleur est disposé à l'intérieur du fût creux.

5. Outil de soudage suivant la revendication 4 caractérisé en ce que l'accumulateur de chaleur interne (72) présente un filetage externe (71) vissé dans un taraudage (70) prévu à l'intérieur du fût de soudage.

6. Outil de soudage suivant l'une quelconque des revendications précédentes caractérisé en ce qu'un élément d'encaissement de contrainte (53) est prévu pour maintenir d'une manière sûre un cordon électrique cet élément d'encaissement de contrainte présentant deux ouvertures (54) pour permettre le passage sinueux du cordon électrique à travers elles et ayant également deux côtés plats pour empêcher la rotation de cet élément à l'intérieur de l'extrémité du boîtier recevant le cordon, cet élément d'encaissement de contrainte étant pourvu d'une paire d'ergots (57) pouvant s'engager dans des petites ouvertures correspondantes prévues dans un extrémité de la plaque de circuit.

7. Outil de soudage suivant l'une quelconque des revendications précédentes caractérisé en ce que deux plaques de circuit (46, 110) sont disposées l'une au-dessus et l'autre en dessous des saillies opposées.

8. Outil de soudage suivant l'une quelconque des revendications précédentes caractérisé en ce qu'il est prévu un espace annulaire entre l'extrémité libre de la douille de retenue et la pointe de soudage pour l'évacuation, sous l'influence d'un vide appliqué, des fumées produites par l'opération de soudage.

9. Outil de soudage suivant la revendication 8 caractérisé en ce qu'il comprend un tube (10) communiquant avec l'espace annulaire et s'étendant à l'extérieur de la douille de retenue pour être raccordé à une source de vide.

10. Outil de soudage suivant la revendication 9 caractérisé en ce qu'un écran (101) est prévu dans la douille de retenue, dans la partie antérieure de celle-ci cet écran ayant une forme sensiblement carrée pour laisser des ouvertures entre cet écran et l'intérieur circulaire de la douille de retenue, en vue de permettre le passage des fumées.

11. Outil de soudage suivant l'une quelconque des revendications précédentes dans lequel la pointe de soudage comporte un fût (36) caractérisé en ce que ce fût est pourvu d'un collet (80) pour retenir d'une manière réglable le fût et des moyens sont prévus sur la douille de retenue pour bloquer ce collet et retenir le fût dans une position désirée.

12. Outil de soudage suivant la revendication 11 caractérisé en ce que le fût de soudage (36) est pourvu, à ses deux extrémités, d'une pointe de soudage (35, 100), chacune de ces pointes pouvant être utilisée en inversant la pointe de soudage et en la retenant au moyen du collet (80).

13. Outil de soudage suivant l'une quelconque des revendications précédentes caractérisé en ce que la pointe de soudage est constituée en fer avec un noyau en cuivre.

14. Outil de soudage suivant la revendication 13 caractérisé en ce que le noyau en cuivre présente une réduction de diamètre par échelon sur toute la longueur du fût en direction de la pointe.

15. Outil de soudage suivant la revendication 14 caractérisé en ce qu'un manchon en acier inoxydable est disposé autour du fût de soudage pour empêcher que la brasure et le flux ne se propagent sur le fût, et pour réduire au minimum la corrosion du noyau en cuivre.

Fig. 1

Fig. 2

Fig. 3

Fig. 4

Fig. 5

Fig. 6

Fig. 7

Fig. 8

Fig. 9

0 145 248

Fig.10

Fig.11

0 145 248

35

68

36

Fig. 13

71

72

65

62

71

35

40

41

72

70

Fig. 12

62

75

74

35

69

36

Fig. 15

0 145 248

65 62 77 36

35

67 75 74 69

Fig. 14

Fig. 16

Fig. 17

Fig. 18

Fig. 19

Fig. 20

0 145 248

96

97

35

68

Fig. 21

71

72

8

63

62

66

35

36

69

Fig. 22

104

Filter

105

Vacuum or Pressure Pump

106

103

36

35

101

62

37

41

40

Fig. 25

100    80    35

Fig. 23

36

35    36    100

Fig. 24

0 145 248

Fig. 26

Fig. 27

Fig. 28

Fig. 29

Fig. 30

0 145 248

Fig. 31

0 145 248